# EUROPEAN PATENT APPLICATION

(11) **EP 1 122 814 A2**
(43) Date of publication of application: **08.08.2001**
(21) Application number: 00121592.0
(22) Date of filing: 02.10.2000
(51) Int. Cl.: H01Q 7/08, H01Q 23/00, H01Q 1/22

(54) **An improved receiver with H-field antennas**

(30) Priority: 05.02.2000 GB 0002606
(71) Applicant: ROKE MANOR RESEARCH LIMITED, Romsey, Hampshire SO51 0ZN (GB)
(72) Inventor: Cleverly, Colin Andrew, Pitton, Salisbury, SP 5 1DL (GB); Bayes, Terence, Hampshire, SO51 5QR (GB)
(74) Representative: Mackett, Margaret Dawn

(57) **Abstract**

The present invention is a low profile Loran-C receiver which uses a ferromagnetic former and cross loop antennas to provide a compact portable receiver for use as a navigation aid. The symmetric design of the receiver provides an omni-directional response from the antennas. The use of a ferromagnetic former enable the receiver's electrical components to be disposed proximate the antennas without suffering from interference caused by the antennas.

## Description

The present invention relates to an improved receiver. More specially, the present invention relates to a low profile LORAN-C receiver which uses H-field antennas.

The use of LORAN (Long Range Aid to Navigation) receivers for navigation is well known. A typical LORAN-C system comprises an H-field (also known as cross loop) antenna coupled by a cable to a receiver. A pair of orthogonal cross loop antennas are often used to provide omni-directional reception in the system.

A problem with current LORAN-C systems is that the receiver is often large and consumes a great deal of power. Additionally, the receiver's electrical components are adversely effected by interference from the antennas as well as external interference. This necessitates that the receiver be located remote from the antennas and often requires that some from of shielding be used, further adding to the weight and cost of the system.

It is an object of the present invention to provide a portable LORAN-C receiver in which the receiver's electronics and the antennas are incorporated into a single device. It is a further object of the present invention to provide a LORAN-C receiver in which the need for shielding the receiver's electrical components is reduced.

According to the present invention there is provided a receiver comprising a ferromagnetic former, a first antenna, and a second antenna, the first antenna comprising two sets of windings each disposed separately and on a first axis of the ferromagnetic former, the second antenna comprising two sets of windings each disposed separately and on a second axis of the ferromagnetic former, the first axis being orthogonal to the second axis, and the ferromagnetic former being configured such that components disposed within an area defined by the former are substantially free from electrical interference.

According to an aspect of the present invention, the ferromagnetic former, first antenna, second antenna, and components are disposed in substantially the same plane.

Advantageously, the present invention provides a LORAN-C receiver which is has a low profile, is portable, and has a lower power consumption that current LORAN-C receivers. Furthermore, the present invention reduces electronic interference caused by the antennas on the receiver's electrical components, thereby reducing the need for shielding and thus reducing weight and manufacturing costs.

While the principle advantages and features of the invention have been described above, a greater understanding and appreciation of the invention may be obtained by referring to the drawings and detailed description of the preferred embodiment, presented by way of example only, in which;
FIGURE 1 is a plane view of the receiver,
FIGURE 2 is a side view of the receiver, and
FIGURE 3 is a further side view of the receiver.

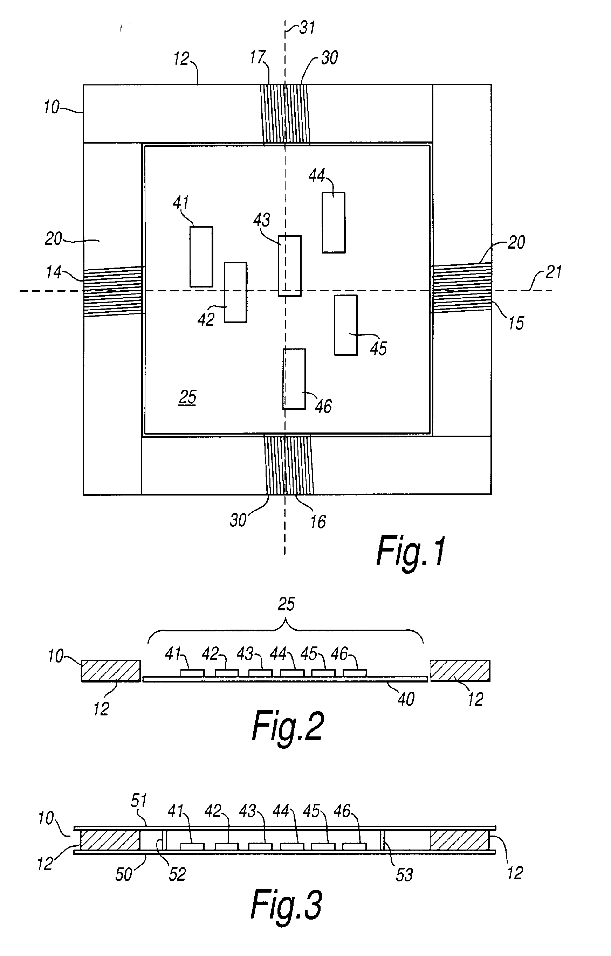

Figure 1 shows receiver 10 comprising former 12 and two loop antennas 20 and 30. Each loop antenna comprises two sets of windings. Loop antenna 20 comprises winding 14 and 15 and loop antenna 30 comprises winding 16 and 17. Winding 14 and 15 are disposed along axis 21 and windings 16 and 17 are disposed along axis 31. Axis 21 is orthogonal to axis 31. The signals from windings 14 and 15 and from windings 16 and 17 are added together respectively, thereby creating the same omni-directional receiving characteristics of a traditional orthogonal cross loop antenna arrangement.

In the preferred embodiment shown in figure 1, former 12 is in the shape of a square and has a footprint of approximately ten centimetres by ten centimetres. The former defines a central area 25 which is located within the perimeter of former. Various electrical components 41-46 are disposed in central area 25. Components 41-46 are preferably disposed on a PCB. Components 42-46 represent those required for the operation of the LORAN-C receiver, a process which is well known in the art.

Former 12 is made of ferrite so as to provide shielding for components 41-46 from electrical interference from external sources. By arranging the winding as shown in figure 1 and described above, any internal interference caused by the operation of antennas 20 and 30 is minimised.

Figure 2 is a side view of the receiver shown in figure 1, where parts also appearing in figure 1 bear identical numerical designation. In figure 2, components 41-46 are disposed on PCB 40 which is situated in central area 25. Former 12, components 41-46, and antennas 20, 30 are all disposed in substantially the same plane, thereby creating a low profile receiver. Receiver 10 shown in figure 2 is approximately five millimetres high.

Figure 3 shows the receiver shown in figure 2 enclosed in a mechanical frame comprising bottom plate 50, top plate 51, and support columns 52, 53. The mechanical frame is preferably made of plastic, or some other suitable rigid, lightweight material.

By arranging windings 14, 15, 16, and 17 in the manner shown in figures 1-3 and described above, the receiver's electrical components can be disposed within the central area defined by the former without suffering from interference caused by antennas 20 and 30. Furthermore, the use of a ferromagnetic former reduced external interference on the components.

The receiver shown in figure 1-3 is preferably a LORAN-C receiver. The compact, light weight design of the receiver allows for a portable device which can be used as navigation aid in leisure, industrial, and military applications.

As will be appreciated by those skilled in the art, various modifications may be made to the embodiment hereinbefore described without departing from the scope of the present invention. For example, the former may be in the shape of a circle or rectangle or other suitable shape. The receiver may consist of more than two antennas. The former may be made of any suitable ferromagnetic material, such as iron, nickel or cobalt.

## Claims

1. A receiver comprising a ferromagnetic former, a first antenna, and a second antenna, the first antenna comprising two sets of windings each disposed separately and on a first axis of the ferromagnetic former, the second antenna comprising two sets of windings each disposed separately and on a second axis of the ferromagnetic former, the first axis being orthogonal to the second axis, and the ferromagnetic former being configured such that components disposed within an area defined by the ferromagnetic former are substantially free from electrical interference.

2. A receiver as claimed in Claim 1, wherein the ferromagnetic former, the first antenna, the second antenna, and the components are disposed in substantially the same plane.

3. A receiver as claimed in any preceding claim, wherein the ferromagnetic former is made of ferrite.

4. A receiver as claimed in any preceding claim, wherein the ferromagnetic former is square shaped.

5. A receiver as claimed in any preceding claim, wherein the components are disposed on a PCB.

6. A receiver as claimed in any preceding claim, wherein the receiver is a LORAN-C receiver.

7. A receiver claimed in any preceding claim, wherein the first and second antennas are arranged to provide omni-directional reception.

8. A receiver claimed in any preceding claim, wherein the first and second antennas are loop antennas.

9. A receiver as hereinbefore described with reference to the accompanying drawings.
